# EUROPEAN PATENT APPLICATION

(11) **EP 2 922 273 A1**
(43) Date of publication of application: **23.09.2015**
(21) Application number: 13855592.5
(22) Date of filing: 20.08.2013
(51) Int. Cl.: H04L 29/08

(54) **RESOURCE SHARING METHOD, APPARATUS, SYSTEM, AND TERMINAL, AND RESOURCE MANAGEMENT CENTER**

(30) Priority: 15.11.2012 CN 201210460407
(71) Applicant: ZTE Corporation, Shenzhen City Guangdong Province 518057 (CN)
(72) Inventor: XIE, Baoyou, Shenzhen Guangdong Province 518057 (CN); XIE, Shibo, Shenzhen Guangdong Province 518057 (CN); ZHONG, Weidong, Shenzhen Guangdong Province 518057 (CN); LI, Yi, Shenzhen Guangdong Province 518057 (CN); WANG, Jigang, Shenzhen Guangdong Province 518057 (CN); LUO, Zhiyun, Shenzhen Guangdong Province 518057 (CN)
(74) Representative: Novagraaf Technologies
(86) International application number: PCT/CN2013/081904
(87) International publication number: WO 2014/075478

(57) **Abstract**

Provided are a resource sharing method, device, system and terminal, and a resource management center. The method includes that description information of a resource to be shared by a terminal is uploaded to a resource management center by a resource sharing device on the terminal; the description information of the resource is provided to resource sharing devices of other terminals by the resource management center to enable the resource sharing devices of other terminals to display the resource in a manner of a file system. In the embodiment of the present invention, the resource sharing device is added on the terminal, and by interacting with a resource management center through the resource sharing device, the terminal acquires the resources shared by other terminals and displays the resources in the manner of the file system, thereby implementing resource sharing among the terminals without knowing on which terminals the shared resources are located and by which terminals the resources are shared. The terminal may access these shared resources through the file system as long as the terminal is authorized to access the resources, thus facilitating the user to share resources between terminals in a network.

## Description

### Technical Field

The present invention relates to the field of distributed file systems of computers, including to a resource sharing method, device, system and terminal, and a resource management center.

### Background

With the rapid development of intelligent networks, it is urgent to achieve the interconnection and internetworking between a Personal Computer (PC), a consumer appliance, or a mobile terminal in a wireless network and a wired network. For example, a set top box or an intelligent television needs to access an audio, a video and a picture stored in a PC, while the PC also needs to access an audio, a video and a picture stored in a mobile terminal or an intelligent television.

At present, there are methods used for implementing interconnection and internetworking among these terminals.
1. The Digital Living Network Alliance (DLNA): established by Sony, Intel and Microsoft et al., aiming at achieving interconnection and internetworking between a PC, a consumer appliance or a mobile terminal in a wireless network and a wired network, so that it is possible to share and increase digital media and content services unlimitedly. Currently, there are already as many as more than 280 member companies. Instead of as a creating technology, the DLNA forms a solution, a standard that can be obeyed by everyone, and focuses on the field of home digital entertainment. Therefore, various techniques and protocols selected by the DLNA are techniques and protocols widely applied at present. It brings the following disadvantage when sharing a file by using such a method. A. All terminals in a network need to support a DLNA network standard, and if a terminal does not support the standard, it is required to copy the file, through other methods (e.g. copying using a Universal Serial Bus (USB)), to a terminal supporting the DLNA network standard. B. Security problems have been exposed. C. The operation of the method is complex. D. Interconnection and internetworking across operating systems remains to be enhanced. E. Interconnection and internetworking can be hardly implemented by the DLNA when devices are located in different local area networks.
2. Interconnection and internetworking is implemented by using a file sharing function of an operating system, including Windows, Linux and so on. These two file systems are shared file systems in a typical form of a file server. The files to be shared by a user are stored on a certain file server in a centralized manner, or servers may provide a file sharing service to each other. The method also brings the following disadvantages. A. A terminal in a local area network is required to support sharing of a Windows file or a Linux file, which is easy to implement on a Windows system, but fails to share files on an android system and an iPhone Operating System (iOS). B. Generally, the method is used for sharing a whole catalogue. When a user only expects to share a single file (e.g. a certain picture), the single file needs to be copied to the shared catalogue, which is inconvenient to operate. C. There are security vulnerabilities existing in sharing of a Windows file, and the function is forbidden by some security tools. D. If computer devices are located in two different local area networks respectively, or computer devices are located in a local area network and a wide area network respectively, a file cannot be shared. For example, members in the same family, enterprise, organization, or unit may be located in different local area networks, or may be also located in a local area network and the Internet respectively. The members may be physically remote to each other, and the members need to cooperate with each other to share files. At the moment, a file cannot be shared by using the method above. E. When accessing a shared file, a user needs to know an address of a server where the shared file locates and further needs to input identity verification information and an address of a shared catalogue.
3. A file is shared by using a storage cloud technology, e.g. Kingsoft Cloud, a MSN SkyDrive virtual magnetic disk, and a QQ network disk. These technologies require a user to upload a shared file to a storage cloud server of a service provider, so that the shared file may be shared to a fiend. The method brings the following disadvantages. A. A user needs to upload a file to a server. The user needs to share a large file, which may be affected by a network transmission speed, thus resulting in a long uploading period of time, and a link may be disconnected. Nevertheless, the embodiment stores a shared file in a local terminal instead of uploading the shared file to a server. B. Limited by a space of a magnetic disk provided by a server, a free storage space of 5G is generally provided to a user in the industry. C. The security of private data of a user is threatened. D. For the existing mainstream cloud storage services, e.g. Kingsoft Cloud, a MSN SkyDrive virtual magnetic disk, and a QQ network disk, it is required to use a special tool provided by a manufacturer to access a file on a storage cloud, and a user cannot access a resource on the storage cloud through a standard file system interface.

### Summary

A resource sharing method, device, system and terminal, and a resource management center are provided in the embodiment of the present invention, to at least solve at least one of the problems in the related art that a location of a file to be shared needs to be know so that the file can be shared, a user needs to input necessary identity verification information, and a file cannot be shared across physical networks and operating systems.

According to a first aspect of the present invention, a resource sharing method, comprising: uploading, by a resource sharing device on a terminal, description information of a resource to be shared by the terminal to a resource management center; providing, by the resource sharing center, the description information of the resource to resource sharing devices of other terminals to enable the resource sharing devices of said other terminals to display the resource in a manner of a file system.

According to an embodiment of the present invention, before uploading the description information of the resource to be shared by the terminal to the resource management center, the method further comprises: extracting, by the resource sharing device on the terminal according to the resource to be shared, a keyword of the resource to be shared; associating, by the resource sharing device on the terminal, the keyword with the resource to be shared; and storing in the terminal and/or the resource management center, by the resource sharing device on the terminal, the keyword associated with the resource to be shared, wherein a type of the resource comprises at least one of the followings: a webpage, a picture, an audio, a video and a document.

According to an embodiment of the present invention, after extracting, by the resource sharing device on the terminal according to the resource to be shared, the keyword of the resource to be shared, associating the keyword with the resource to be shared and storing, in the terminal and/or the resource management center, the keyword associated with the resource to be shared, the method further comprises: accepting, by the resource sharing device on the terminal, a keyword modified by a user of the terminal according to an actual situation.

According to an embodiment of the present invention, before uploading the description information of the resource to be shared by the terminal to the resource management center, the method further comprises: accepting login information inputted by a user, logging in to the resource management center and setting to share resources.

According to an embodiment of the present invention, the resource comprises at least one of the followings: a file accessible by a user, a file created by a user, a file used by a user, a webpage accessed by a user and a file being accessed by a user.

According to an embodiment of the present invention, the terminal and said other terminals are located in a same local area network, or are located in different local area networks, or are located in a local area network and a wide area network respectively.

According to a second aspect of the present invention, a resource sharing method, comprising: acquiring, by a resource sharing device on a terminal, through a resource management center, description information of resources shared by other terminals, wherein the description information of the resources are uploaded to the resource management center by resource sharing devices of said other terminals; displaying, in a manner of a file system, the resources shared by said other terminals.

According to an embodiment of the present invention, before acquiring, through the resource management center, the description information of the resources shared by said other terminals, the method further comprises: sending, by the resource sharing device on the terminal, a searching request to the resource management center and/or said other terminals respectively, wherein the searching request is used for searching for the resources shared by said other terminals and/or resources shared by other users, and the searching request comprises a keyword of a resource to be searched; receiving, by the resource sharing device on the terminal, a searching result from the resource management center and/or said other terminals, wherein the searching result is a set of resources which satisfy a searching condition of the keyword and are searched in a set of shared resources by the resource management center and/or said other terminals.

According to an embodiment of the present invention, after displaying the resources shared by said other terminals in the manner of the file system, the method further comprises: communicating, by the resource sharing device on the terminal, with the resource management center and/or said other terminals; accessing, by the resource sharing device on the terminal through the file system, the resources shared by said other terminals to the terminal; and reading and writing, by the resource sharing device on the terminal, contents of the resources.

According to an embodiment of the present invention, displaying, in the manner of the file system, the resources shared by said other terminals comprises: providing, by the resource sharing device on the terminal, a standard file system interface; accessing, through an application of the terminal, the resources by using the standard file system interface.

According to an embodiment of the present invention, the standard file system interface operates in different operating systems, wherein the different operating systems comprise: a Windows operating system, a Linux operating system, an iPhone Operating System, iOS, an Advanced Interactive executive, AIX, operating system, a Solaris operating system and other Unix-like operating systems.

According to an embodiment of the present invention, the standard file system interface satisfies a standard of a Portable Operating System Interface of Unix, POSIX, file system and provides at least one of the following interfaces to the application: an interface for opening a file, an interface for closing a file, an interface for reading and writing a file, and a POSIX file lock; when a plurality of terminals concurrently read and write shared resources which the plurality of terminals are authorized to access, reading and writing conflict is prevented by using the POSIX file lock; after the terminal modifies the shared resources, said other terminals read a content of the modified resources.

According to an embodiment of the present invention, the resources shared by said other terminals comprise shared resources on other terminals, which are accessible by a user logging in on the terminal after the user shares resources to himself on said other terminals.

According to an embodiment of the present invention, the terminal and said other terminals are located in a same local area network, or are located in different local area networks, or are located in a local area network and a wide area network respectively.

According to a third aspect of the present invention, a resource sharing method, comprising: acquiring, by a resource management center, through a resource sharing device on a terminal, description information of a resource to be shared by the terminal; providing, by the resource management center, the description information of the resource to resource sharing devices on other terminals to enable the resource sharing devices on said other terminals to display the resource in a manner of a file system.

According to an embodiment of the present invention, before acquiring, by the resource management center, through the resource sharing device on the terminal, the description information of the resource to be shared by the terminal, the method further comprises: accepting, by the resource management center, registration of a user and storing, by the resource management center, registration information of the user; authenticating, by the resource management center, an identity of a logged-in user, and accepting, by the resource management center, a login request of a legal user.

According to an embodiment of the present invention, before acquiring, by the resource management center, through the resource sharing device on the terminal, the description information of the resource to be shared by the terminal, the method further comprises: accepting, by the resource management center, a request of a user for adding other users as friends and/or forming a user group with other users, and storing, by the resource management center, information of the friends of the user and/or information of the user group to which the user belongs.

According to an embodiment of the present invention, when the terminal fails to directly communicate, in a Peer-to-Peer, P2P, manner, with other terminals where resources to be accessed locate, the method further comprises: providing, by the resource management center, a data transmission transfer service used for the terminal communicating with said other terminals, wherein the data transmission transfer service comprises that the resource management center forwards to said other terminals, received data to be sent by the terminal to said other terminals, and the resource management center forwards to the terminal, received data to be sent by said other terminals to the terminal.

According to an embodiment of the present invention, the terminal and said other terminals are located in a same local area network, or are located in different local area networks, or are located in a local area network and a wide area network respectively.

According to the fourth aspect of the present invention, a resource sharing device, applied to a terminal, wherein the resource sharing device comprises: an uploading component, configured to upload description information of a resource to be shared to a resource management center; a first acquiring component, configured to acquire from the resource management center, description information of resources shared by other terminals; a displaying component, configured to display, in a manner of a file system, resources shared by said other terminals.

According to an embodiment of the present invention, the resource sharing device further comprises: a login component, configured to accept login information inputted by a user and log in to the resource management center; a resource sharing component, configured to set to share resources; an abstracting component, configured to extract, according to the resource to be shared, a keyword of the resource to be shared, associate the keyword with the resource to be shared, and store in the terminal and/or the resource management center, the keyword associated with the resource to be shared, wherein a type of the resource comprises at least one of the followings: a webpage, a picture, an audio, a video and a document.

According to an embodiment of the present invention, the resource sharing device further comprises: a resource accessing component, configured to communicate with the resource management center and/or said other terminals, access through the file system, the resources shared by said other terminals to the terminal, and read and write contents of the resources.

According to an embodiment of the present invention, the resource sharing device further comprises: a sending component, configured to send a searching request to the resource management center and/or said other terminals respectively, wherein the searching request is used for searching for the resources shared by said other terminals and/or resources shared by other users, and the searching request comprises a keyword of a resource to be searched; a receiving component, configured to receive a searching result from the resource management center and/or said other terminals, wherein the searching result is a set of resources which satisfy a searching condition of the keyword and are searched in a set of shared resources by the resource management center and/or said other terminals.

According to an embodiment of the present invention, the terminal and said other terminals are located in a same local area network, or are located in different local area networks, or are located in a local area network and a wide area network respectively.

According to a fifth aspect of the present invention, a terminal, wherein the terminal is provided with a resource sharing function, and the terminal comprises any one of the above resource sharing devices.

According to a sixth aspect of the present invention, a resource management center, comprising: a second acquiring component, configured to acquire, through a resource sharing device on a terminal, description information of a resource to be shared by the terminal; a providing component, configured to provide the description information of the resource to resource sharing devices on other terminals to enable the resource sharing devices on said other terminals to display the resource in a manner of a file system.

According to an embodiment of the present invention, the resource management center further comprises: a first storing component, configured to accept registration of a user and store registration information of the user; an authenticating component, configured to authenticate an identity of a logged-in user; a first receiving component, configured to receive a login request of a legal user.

According to an embodiment of the present invention, the resource management center further comprises: a second receiving component, configured to receive a request of a user for adding other users as friends and/or forming a user group with other users; a second storing component, configured to store information of the friends of the user and/or information of the user group to which the user belongs.

According to an embodiment of the present invention, the resource management center further comprises: a transfer service providing component, configured to, when the terminal fails to directly communicate, in a Peer-to-Peer, P2P, manner, with other terminals where resources to be accessed locate, provide a data transmission transfer service used for the terminal communicating with said other terminals, wherein the data transmission transfer service comprises that the resource management center forwards to said other terminals, received data to be sent by the terminal to said other terminals, and the resource management center forwards to the terminal, received data to be sent by said other terminals to the terminal.

According to a seventh aspect of the present invention, a resource sharing system, comprising the above terminal and any one of the above resource management centers.

In the embodiment of the present invention, a resource sharing device is added on a terminal, and by interacting with a resource management center, the terminal acquires resources shared by other terminals and displays the resources in a manner of a file system, thereby implementing resource sharing among the terminals without knowing terminals on which the shared resources are located and by which terminals the resources are shared. The terminal may access these shared resources through the file system as long as the terminal is authorized to access the resources, thus facilitating a user to share resources between terminals in a network.

### Brief Description of the Drawings

The accompanying drawings illustrated herein are used for providing further understanding to the present invention and constitute a part of the present application. The exemplary embodiments and description thereof of the present invention are used for explaining the present invention instead of constituting improper limitation to the present invention. In the accompanying drawings:
Fig. 1 is a first flowchart of a resource sharing method according to an embodiment of the present invention;
Fig. 2 is a second flowchart of a resource sharing method according to an embodiment of the present invention;
Fig. 3 is a third flowchart of a resource sharing method according to an embodiment of the present invention;
Fig. 4 is a structural block diagram of a resource sharing device according to an embodiment of the present invention;
Fig. 5 is a structure block diagram of a resource management center according to an embodiment of the present invention;
Fig. 6 is a structure block diagram of a resource sharing system according to an embodiment of the present invention;
Fig. 7 is a flowchart of sharing a local resource by a terminal according to an example embodiment of the present invention;
Fig. 8 is a flowchart of sharing a resource to other terminals in an intelligent network by a terminal according to an example embodiment of the present invention;
Fig. 9 is a flowchart of accessing, by a terminal, resources shared by other terminals in a network according to an example embodiment of the present invention;
Fig. 10 is a flowchart of searching for a shared resource by a terminal according to an example embodiment of the present invention;
Fig. 11 is a structural diagram of a resource sharing system according to an example embodiment of the present invention;
Fig. 12 is a flowchart of searching for a shared resource by a terminal according to an example embodiment of the present invention; and
Fig. 13 is a schematic diagram of an implementation process of a typical standard file system interface named open according to an example embodiment of the present invention.

### Detailed Description of the Embodiments

It needs to be noted that the embodiments in the present application and the characteristics in the embodiments may be combined with each other if there is no conflict. The present invention will be described in details below with reference to the accompanying drawings and in combination with the embodiments.

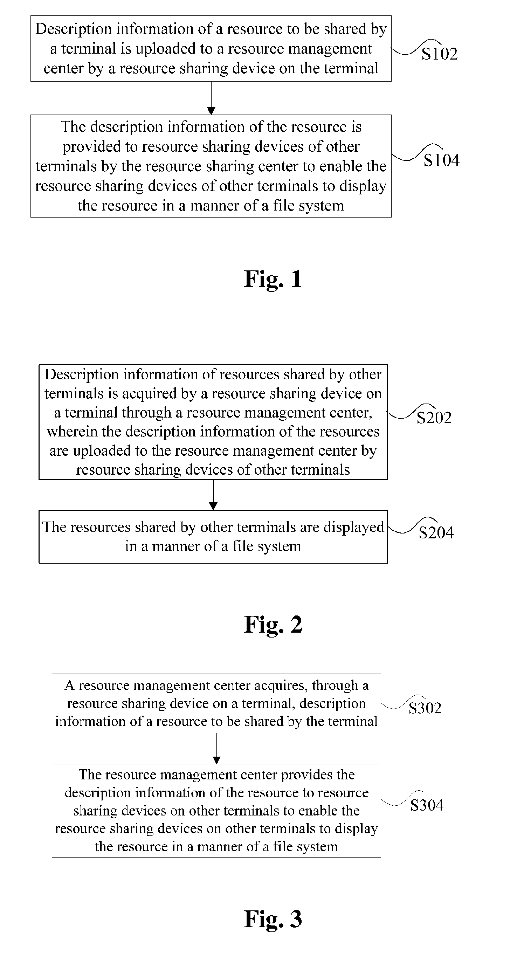

A file sharing method is provided in an embodiment of the present invention. Fig. 1 is a flowchart of a resource sharing method according to an embodiment of the present invention. As shown in Fig. 1, the method includes the following Step 102 to Step 104.
Step 102: Description information of a resource to be shared by a terminal is uploaded to a resource management center by a resource sharing device on the terminal.
Step 104: The description information of the resource is provided to resource sharing devices of other terminals by the resource sharing center to enable the resource sharing devices of other terminals to display the resource in a manner of a file system.

In the related art, a location of a file to be shared needs to be known so that the file can be shared, a user needs to input necessary identity verification information, and a file cannot be shared across local areas. For example, a user needs to know a host name or an Internet Protocol (IP) address of a shared file when sharing is performed through a Windows file sharing function. A host name or an IP address of a Network File System (NFS) server or an address of a shared catalogue needs to be known when sharing is performed through a Linux NFS. In the present embodiment, a resource sharing device is added on the terminal, and by interacting with the resource management center, the terminal acquires resources shared by other terminals and displays the resources in the manner of the file system, thereby implementing resource sharing among the terminals without knowing on which terminals the shared resources are located and by which terminals the resources are shared. The terminal may access these shared resources through the file system as long as the terminal is authorized to access the resources, thus facilitating a user to share resources between terminals in a network.

In an example embodiment, before Step 102, the resource sharing device on the terminal may extract a keyword of the resource to be shared, make the keyword corresponding to the resource, and store the keyword associated with the resource to be shared to facilitate a user to search for the resource. The process may be optionally implemented by the following steps that the resource sharing device on the terminal extracts: according to the resource to be shared, a keyword of the resource to be shared is extracted, the keyword is associated with the resource to be shared, and the keyword associated with the resource to be shared is stored in the terminal and/or the resource management center, wherein a type of the resource includes at least one of the followings: a webpage, a picture, an audio, a video and a document. In an optional manner, the user may modify the stored keyword according to a practical situation. After the resource sharing device on the terminal extracts, according to the resource to be shared, the keyword of the resource to be shared, associates the keyword with the resource to be shared and stores the keyword in the terminal and/or the resource management center, the method further includes that the resource sharing device on the terminal accepts the keyword modified by a user of the terminal according to a practical situation.

In a optional manner, before the description information of the resource to be shared by the terminal is uploaded to the resource management center, a user needs to perform login and a login process may be optionally implemented by the following steps: the resource sharing device on the terminal accepts login information inputted by a user, logs in to the resource management center and sets to share resources. In order to ensure that the terminal can share the resource rapidly and accurately, whether the resource exists in the terminal locally and whether the user is authorized to access the resource, and so on may be determined first before the terminal shares the resource with other terminals. The terminal may further cancel sharing of the resource. When other terminals have opened the resource, other terminals return a failure subsequently to a reading and writing request of a resource that has been cancelled to be shared.

The resources include at least one of the followings: a file accessible by a user, a file created by a user, a file used by a user, a webpage accessed by a user and a file being accessed by a user.

The terminals and other terminals may be located in the same local area network or different local area networks or are located in a local area network and a wide area network respectively.

It is described from a perspective of uploading information of a shared resource in the embodiment as shown in Fig. 1, while from a perspective of acquiring shared resources in the embodiment as shown in Fig. 2.

A resource sharing method is further provided in an embodiment of the present invention. Fig. 2 is a flowchart of a resource sharing method according to an embodiment of the present invention. As shown in Fig. 2, the method includes the following Step 202 to Step 204.
Step 202: Description information of resources shared by other terminals is acquired by a resource sharing device on a terminal through a resource management center, wherein the description information of the resources are uploaded to the resource management center by resource sharing devices of other terminals.
Step 204: The resources shared by other terminals are displayed in a manner of a file system.

In an example embodiment, the terminal may acquire the description information of the resources from the resource management center. For example, a list of terminals that have shared resources is acquired from the resource management center, and then the terminal accesses the resource according to its own access authority. When the terminal is not authorized, the terminals where the resources locate return an error message to the terminal. When the terminal is authorized, the terminal is allowed to access the resources. It should be noted that the terminal may further acquire a set of shared resources from the resource management center directly, thereby all shared resources that can be accessed by the terminal can be displayed in one set, which will increase a burden of a server, however.

In an example embodiment, a searching function is provided. Before Step 202, the method may further include that the resource sharing device on the terminal sends a searching request to the resource management center and/or other terminals respectively, wherein the searching request is used for searching for the resources shared by other terminals and/or resources shared by other users, and the searching request includes the keyword of a resource to be searched; the resource sharing device on the terminal receives a searching result from the resource management center and/or other terminals, wherein the searching result is a set of resources which satisfy a searching condition of the keyword and are searched in a set of shared resources by the resource management center and/or other terminals. It should be noted that, whether fuzzy searching or precise searching is performed may be selected on a searching interface.

After the resources shared by other terminals are displayed in the manner of the file system, the terminal may access the resources, including the following steps: the resource sharing device on the terminal communicates with resource management center and/or other terminals, accesses, through the file system, the resources shared by other terminals to the terminal, and reads and writes contents of the resources.

In an optional manner, Step 204 includes that the resource sharing device on the terminal provides a standard file system interface; through an application of the terminal, the resources are accessed by using the standard file system interface. The standard file system interface operates in different operating systems and the different operating systems include: a Windows operating system, a Linux operating system, an iOS, an AIX operating system, a Solaris operating system and other Unix-like operating systems. The standard file system interface satisfies a standard of a POSIX file system and provides at least one of the following interfaces to the application: an interface for opening a file, an interface for closing a file, an interface for reading and writing a file, and a POSIX file lock; when a plurality of terminals concurrently read and write shared resources which the plurality of terminals are authorized to access, reading and writing conflict is prevented by using the POSIX file lock; after the terminal modifies the shared resources, other terminals read a content of the modified resources.

In an optional manner, the resources shared by other terminals include shared resources on other terminals, which are accessible by a user logging in on the terminal after the user shares resources to himself on other terminals.

In an optional manner, the terminal and other terminals are located in the same local area network, or are located in different local area networks, or are located in a local area network and a wide area network respectively. As a matter of fact, different networks refer to local area networks or wide area networks used by members in one family, company, organization, and unit to share and access a file. These different networks may be located in different physical areas all over the world.

A resource sharing method is further provided in the embodiment of the present invention, which is described from a resource management center side. Fig. 3 is a flowchart of a resource sharing method according to an embodiment of the present invention. As shown in Fig. 3, the method includes the following Step 302 to Step 304.
Step 302: A resource management center acquires, through a resource sharing device on a terminal, description information of a resource to be shared by the terminal.
Step 304: The resource management center provides the description information of the resource to resource sharing devices on other terminals to enable the resource sharing devices on other terminals to display the resource in a manner of a file system.

In an optional manner, before Step 302, the method further includes that the resource management center accepts registration of a user and stores registration information of the user; the resource management center authenticates an identity of a logged-in user, and accepts a login request of a legal user.

In an optional manner, before Step 302, the method further includes that the resource management center accepts a request of a user for adding other users as friends and/or forming a user group with other users, and stores information of the friends of the user and/or information of the user group to which the user belongs.

When the terminal fails to directly communicate, in a P2P manner, with other terminals where resources to be accessed locate, the method further includes: the resource management center provides a data transmission transfer service used for the terminal communicating with other terminals, wherein the data transmission transfer service comprises that the resource management center forwards to other terminals, received data to be sent by the terminal to other terminals, and the resource management center forwards to the terminal, received data to be sent by other terminals to the terminal.

It should be noted that the terminal performs P2P communication with the other terminals preferentially so as to read and write the resources. When the terminal fails to perform P2P communication with the resource sharing devices on the other terminals directly, the terminal communicates with the resource management center, and the resource management center transfers data, so that the terminal completes the communication with the resource sharing devices on the other terminals. After performing login successfully, the terminal may access, through the file system, the resources shared by other terminals to the terminal.

In an optional manner, the terminal and the other terminals may be located in the same local area network or different local area networks or are located in a local area network and a wide area network respectively.

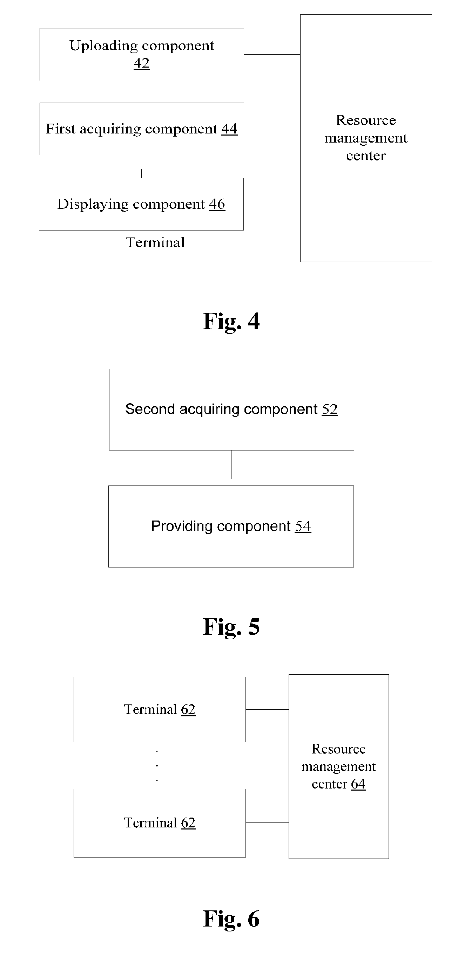

A resource sharing device is provided in an embodiment of the present invention, which is applied to a terminal. The device may be applied to implementing the resources sharing methods as shown in Fig. 1 and Fig. 2. Fig. 4 is a structural block diagram of a resource sharing device according to an embodiment of the present invention. As shown in Fig. 4, the device includes an uploading component 42, a first acquiring component 44 and a displaying component 46. The structure of the device will be expounded below.

The uploading component 42 is configured to upload description information of a resource to be shared to a resource management center. The first acquiring component 44 is configured to acquire from the resource management center, description information of resources shared by other terminals. The displaying component 46 is coupled to the first acquiring component 44 and configured to display, in a manner of a file system, the resources shared by the other terminals.

In an optional manner, the device further includes a login component, configured to accept login information inputted by a user and log in to the resource management center; a resource sharing component, coupled to the login component and configured to set share resources; an abstracting component, coupled to the resource sharing component and configured to extract, according to the resource to be shared, a keyword of the resource to be shared, associate the keyword with the resource to be shared, and store the keyword in the terminal and/or the resource management center, wherein the type of the resource includes at least one of the followings: a webpage, a picture, an audio, a video and a document.

In an optional manner, the device further includes: a resource accessing component, coupled to the displaying component 46 and configured to communicate with the resource management center and/or other terminals, access through the file system, the resources shared by other terminals to the terminal, and read and write contents of the resources.

It should be noted that the resource accessing component in the terminal preferentially performs P2P communication directly with resource accessing components on other terminals so as to complete reading and writing of the resources. When the P2P communication cannot be performed directly with the resource accessing components on other terminals, the terminal communicates with the resource management center. The resource management center transfers data and completes communication with the resource accessing components on other terminals. After performing login successfully, the terminal may access, through the file system, the resources shared by other terminals to the terminal.

In an optional manner, the device further includes a sending component, configured to send a searching request to the resource management center and/or other terminals respectively , wherein the searching request is used for searching for the resources shared by other terminals and/or resources shared by other users, and the searching request includes a keyword of a resource to be searched; a receiving component, coupled to the sending component and configured to receive a searching result from the resource management center and/or other terminals, wherein the searching result is a set of resources which satisfy a searching condition of the keyword and are searched in a set of shared resources by the resource management center and/or other terminals.

In an optional manner, the displaying component 46 includes: an interface providing element configured to provide a standard file system interface. The resources are accessed, through an application of the terminal, by using the standard file system interface. The standard file system interface operates in different operating systems and the different operating systems include: a Windows operating system, a Linux operating system, an iOS, an AIX operating system, a Solaris operating system and other Unix-like operating systems. The standard file system interface satisfies a standard of a POSIX file system and provides at least one of the following interfaces to the application: an interface for opening a file, an interface for closing a file, an interface for reading and writing a file, and a POSIX file lock; when a plurality of terminals concurrently read and write shared resources which the plurality of terminals are authorized to access, reading and writing conflict is prevented by using the POSIX file lock; after the terminal modifies the shared resources, other terminals read a content of the modified resources.

In an optional manner, the resources shared by other terminals include shared resources on other terminals, which can be accessible by a user logging in on the terminal after the user shares resources to himself on other terminals.

In an optional manner, the terminal and other terminals are located in the same local area network, or are located in different local area networks, or are located in a local area network and a wide area network respectively.

A terminal is further provided in an embodiment of the present invention. The terminal is provided with a resource sharing function. The terminal includes any one of the above file sharing devices.

A resource management center is further provided in an embodiment of the present invention. The resource management center may be applied to implement the resource sharing method as shown in Fig. 3. Fig. 5 is a structure block diagram of a resource management center according to an embodiment of the present invention. As shown in Fig. 5, the resource management center includes a second acquiring component 52 and a providing component 54. A structure of the resource management center will be expounded below.

The second acquiring component 52 is configured to acquire, through a resource sharing device on a terminal, description information of a resource to be shared by the terminal. The providing component 54 is coupled to the second acquiring component 52 and configured to provide the description information of the resource to resource sharing devices on other terminals to enable the resource sharing devices on other terminals to display the resource in a manner of a file system.

In an optional manner, the resource management center further includes: a first storing component, configured to accept registration of a user and store registration information of the user; an authenticating component, coupled to the first storing component and configured to authenticate an identity of a logged-in user; a first receiving component, coupled to the authenticating component and configured to receive a login request of a legal user.

In an optional manner, the resource management center further includes: a second receiving component, configured to receive a request of a user for adding other users as friends and/or forming a user group with other users; a second storing component, coupled to the second receiving component and configured to store information of the friends of the user and/or information of the user group to which the user belongs.

In an optional manner, the resource management center further includes a transfer service providing component configured to, in the case that the terminal fails to directly communicate, in a P2P manner, with other terminals where resources to be accessed locate, provide a data transmission transfer service used for the terminal communicating with other terminals, wherein the data transmission transfer service includes that the resource management center forwards to other terminals, received data to be sent by the terminal to other terminals, and the resource management center forwards to the terminal, received data to be sent by other terminals to the terminal.

A resource sharing system is further provided in an embodiment of the present invention. The system may be applied to implement the resource sharing methods as shown in Fig. 1, Fig. 2 and Fig. 3. Fig. 6 is a structure block diagram of a resource sharing system according to an embodiment of the present invention. As shown in Fig. 6, the system includes a terminal 62 and a resource management center 64, wherein the terminal 62 is the any one of the above terminals, and the resource management center 64 is the any one of the above resource management centers.

It needs to be noted that the resource sharing device, system, and terminal and the resource management center correspond to the embodiments of methods, and specific implementation processes thereof have been expounded in the embodiments of the methods and will not be described repeatedly here.

In another example embodiment, the resource sharing device may be also implemented by the following components.

A standard file system interface (used for implementing functions of the interface providing unit) configured to provide a standard invoking interface for a Linux operating system or a Windows operating system, e.g. a standard file system interface such as the interface for opening a file, the interface for reading a file, the interface for writing a file and so on. When a user uses a Windows operating system, the standard file system interface will simulate a virtual magnetic disk in the Windows operating system, and the user may access, through this virtual magnetic disk, files shared by other users. When the user uses a Linux operating system or other Unix-like operating systems (e.g. AIX, iOS, and Berkeley Software Distribution (BSD) operating systems), the standard file system interface mounts a file system to a designated catalogue and the user may access, by accessing this local catalogue, files shared by other users.

The interface technologies of the Windows virtual magnetic disk technology and files systems of other operating systems are proven techniques in the industry. A distributed file system is specifically implemented according to a requirement of an interface standard of an operating system in the embodiment of the present invention.

A user authenticating component, the file system (which may be also called as a distributed link shared file system) in the embodiments of the present invention may be applied to a home, an enterprise, an organization, a government institution and so on. Users in each family, enterprise, organization or government institution form an intelligent network. A distributed link shared file system is established in each intelligent network by using a user as a unit. Each user may share a file in a local terminal to other users in the family, enterprise, organization or government institution. Files that can be shared include, but not only include a file accessible by a user, a file created by a user, a file used by a user and a webpage accessed by a user. When users share these files or web pages, users that are allowed to access these files in an intelligent network may be designated, and an access authority may be designated for each user respectively. When users share these files or web pages, it may be also designated that all users and guests in an intelligent network are allowed to access these files.

When each user accesses, through the distributed link shared file system in the embodiments of the present invention, a file list shared by other users, the user authenticating component determines the file list that a current user can access, and lists, through a standard file system, a list of files that the user is authorized to access.

When each user opens, through the distributed link shared file system in the embodiments of the present invention, files shared by other users, the user authenticating component judges whether a current user is authorized to open a shared file in a designated manner, and returns an error to the user if the user is not authorized.

A data transmitting component, when invokes the standard file system interface is called through the application to access files shared by other terminals, the data transmitting component performs data communication with data transmitting components in other terminals, and the data transmitting components running in other terminals read data in a local file system of the terminal and return a result to a terminal initiating a request.

A user tool, and a plug-in component of an operating system, a user may complete the following works through the user tool and the plug-in component of the operating system.
(1) A file created by the user, a file used by the user and a webpage accessed by the user are recorded. The user may share these files or web pages through an operating interface of the user tool, and a plug-in component of an operating system.
(2) A file in a local operating system is shared.
(3) A file in a local operating system is cancelled to be shared.
(4) A keyword of a shared file is set manually for searching.
(5) Files satisfying conditions and shared by other users are searched.
(6) When the user browses a webpage or a picture, or plays an audio or a video, or edit a document, the webpage, picture, audio, video and document file accessed currently may be shared through a shortcut key or a shortcut menu.

A distributed search engine (used for implementing functions of the sending component), a user initiates a searching request through the user tool and the plug-in component of the operating system to search for files shared by other users in an intelligent network to which the user belongs. The user tool and the plug-in component of the operating system invoke the distributed search engine to send the searching request to other terminals in the intelligent network to which the user belongs. All terminals in the intelligent network to which the user belongs perform searching in their respective local terminals and send searching results to a terminal initiating the searching request.

An automatic keyword extracting component (used for implementing some functions of the extracting component), when a user shares, through the user tool and the plug-in component of the operating system, a file in an intelligent network to which the user belongs, the automatic keyword extracting component extracts a keyword of the shared file automatically, and associates the keyword with the file to be shared.

A link storing component, a user is able to not only share a file in a local file system, but also share a webpage link through the distributed link shared file system according to the embodiments of the present invention. When the user shares the webpage link, a title and a keyword of the webpage simultaneously are extracted as the keywords of the webpage in the distributed link shared file system according to the embodiments of the present invention, and the keywords is associated with the webpage.

In a practical application, connection relations of the above components are as follows: the standard file system interface is connected with the user authenticating component, the user tool and the plug-in component of the operating system and the data transmitting component. The data transmitting component is connected with the user authenticating component, the standard file system interface, the user tool and the plug-in component of the operating system, and the distributed search engine component. The user tool and the plug-in component of the operating system is connected with the user authenticating component, the standard file system interface, the distributed search engine, the automatic keyword extracting component and the link storing component. The distributed search engine is connected with the user authenticating component, the data transmitting component, and the user tool and the plug-in component of the operating system. The user authenticating component is connected with the standard file system interface, the distributed search engine, the data transmitting component, and the user tool and the plug-in component of the operating system.

It may be learned from the above description that a distributed link shared file system is implemented in an embodiment of the present invention. In an intelligent network, a member of the intelligent network may share a file in a terminal at any time and may also cancel sharing at any time. A separate file may be shared, a catalogue and a sub-catalogue of the catalogue may be also shared, and a webpage link may be also shared. Once a file is shared, the system sends messages to other terminals in the same intelligent network and all terminals in the same intelligent network update the shared file list. A user does not need to know on which terminals these shared files are located, and also does not need to know by which terminals the files are shared. The user may access these shared files by using a standard file system invoking interface through the distributed link shared file system according to the embodiment of the present invention as long as the user is authorized to access the shared files.

When the system is started, the system loads the file system by applying different measures according to the different operating systems used by the user. For example, the system simulates a virtual magnetic disk when the user uses a Windows operating system. The user may access, through this virtual magnetic disk, files shared by other users. The system mounts the distributed file system onto a specific catalogue when the user uses a Linux file system and the user may access, through this catalogue, files shared by other users.

In the method, the user does not need to know the location of a shared file. When the user accesses the shared file, the shared file may be accessed by a virtual magnetic disk or a specific file catalogue. Nevertheless, it needs to know on which machine the shared files locate, and needs to input necessary identity authentication information by the user in the related file sharing technology, no matter a Windows file is shared or an NFS or Server Message Block (SMB) file is shared.

A distributed search engine is introduced in an embodiment of the present invention. The distributed search engine may search a shared file according to a keyword. When a user shares a file, the system may extract a type and a keyword of the file automatically. For example, a title, an artist, an album, a format and a duration of an audio file are extracted. A catalogue, an author, a title, a subject, a keyword, a category, a state and a remark of a word document are extracted. An author, a title, a subject, a keyword, a creator, and information of the creator and so on of a Portable Document Format (PDF) file are extracted. The user may further modify the keyword of the file manually. For example, a keyword of a certain picture is set as "most beautiful Fenghuang City". A keyword of a certain MPEG-1 or MPEG-2 Audio Layer III (MP3) file is set as "the Rolling Stones", and the shared file may be searched by other users through the keywords "most beautiful Fenghuang City" and "the Rolling Stones".

Besides setting the keyword of the file, the system may further classify the shared files automatically. For example, all files with an extension of "mp3" are classified as audios while all files with an extension of "jpg" are set as pictures.

When a user searches for a shared file, it may be designated that the shared file is searched in a certain kind of files, or the file may be also searched in all categories by performing fuzzy matching for a keyword. When the searching is performed in a specific kind of files, a searching condition may be designated in details. For example, when the searching operation is performed among audio files, a searching condition including a title, an artist, an album, a format, a duration and so on of an audio file may be designated. When the searching operation is performed among all categories, fuzzy searching is performed in all shared files.

Besides, a link storage is further provided in an embodiment of the present invention. A user is able to not only add a local file of a terminal to a distributed link shared file system to be shared, but also add a webpage link to the distributed link shared file system to be shared. When the webpage link is added to the distributed link shared file system, the system extracts a keyword of the webpage automatically and associates the keyword with the webpage link. The user may find the webpage link by searching the keyword and open the link by using a browser.

The user tool and the plug-in component of the operating system automatically record files recently accessed by a user and display the recently-accessed files in an operating interface of the user tool and the plug-in component of the operating system. The user may select and share these accessed files. The user tool and the plug-in component of the operating system further allow the user to perform a one-click sharing operation. When the user is accessing a certain file and expects to share the file into an intelligent network to which the user belongs, the currently accessed file may be shared, through a shortcut key or a shortcut menu, into the intelligent network to which the user belongs.

To make technical solutions and implementation methods in the embodiment of the present invention clearer, implementation processes of the present invention will be expounded below in combination with example embodiments.

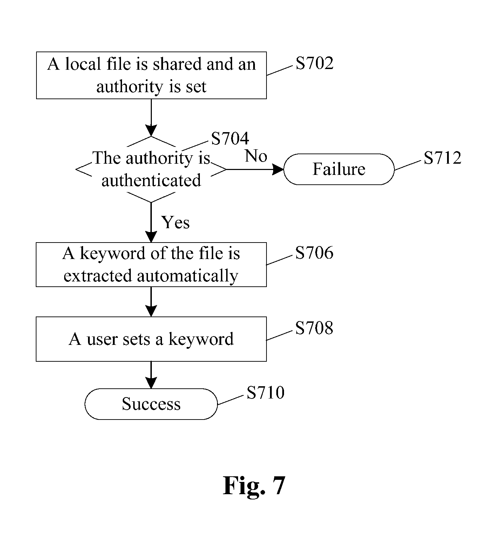

Fig. 7 is a flowchart of sharing a local resource by a terminal according to an example embodiment of the present invention, including the following steps as shown in Fig. 7.
Step 702: Users operate a user tool and a plug-in component of an operating system to share local files. Users that can access these shared files in an intelligent network are set, and authorities of users in the intelligent network to access these shared files are set. The file authority types that can be set include, but are not limited to the followings: to read-only the file, to read/write the file, be executable and duplicable for the file. A user, who is not authorized to duplicate, starts a virtual desktop automatically on a local device to connect a remote device instead of reading or writing a content of a file directly by using the local device. The remote device opens the file and displays on the local device a desktop content on the remote device through a virtual desktop technique.
Step 704: A user authenticating component judges whether a file to be shared exists on a local terminal, and simultaneously judges whether a user is authorized to access a local file to be shared. When the local file to be shared does not exist, or the user is not authorized to access the file to be shared, Step 712 is executed. Otherwise, Step 706 is executed.
Step 706: An automatic keyword extracting component extracts a keyword of the shared file automatically according to the type of the shared file, and associates the keyword with the shared file. The extracted keyword is stored on the local terminal.
Step 708: The user may modify the keyword of the shared file on an operating interface of the automatic keyword extracting component and store the keyword in the system. Generally, the keyword is stored in the local terminal of the user.
Step 710: Other users authorized to access the shared file in the intelligent network may access the content of the shared file by the distributed link shared file system. When a user enters the file system, usernames of the users that have shared files to the user in an intelligent network to which the users belong may be seen in a catalogue of a first layer of the file system. The usernames are clicked to enter a catalogue of the next layer and all catalogues and files shared by the users may be seen.
Step 712: The sharing operation fails and the process is exited.

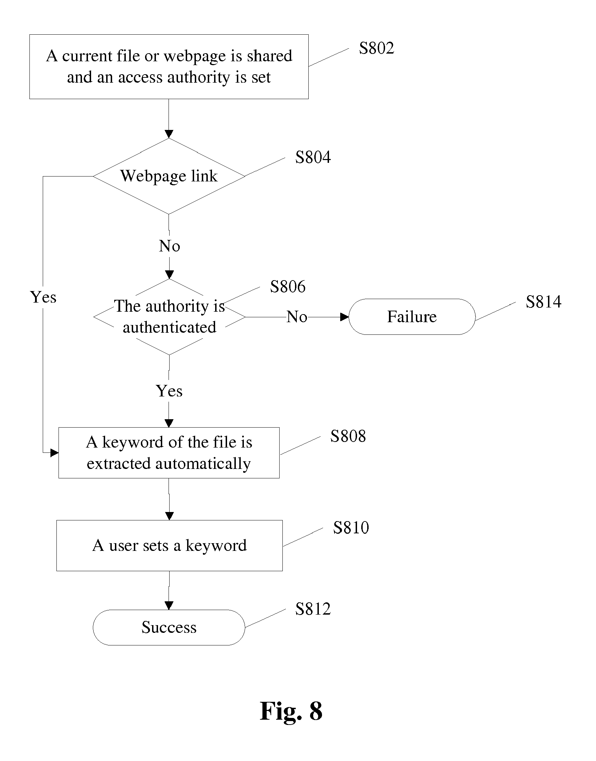

Fig. 8 is a flowchart of sharing a resource to other terminals in an intelligent network by a terminal according to an example embodiment of the present invention, including the following steps as shown in Fig. 8.
Step 802: When browsing a webpage or a picture, playing an audio or a video, or editing a document, a user shares the currently accessed webpage, picture, audio, video or document by a shortcut key or a shortcut menu. The user may also share an accessed webpage, picture, audio, video or document through operating an operating interface of a user tool and a plug-in component of an operating system. When shared access is set, users who can access these shared files in an intelligent network may be set, and the authorities of the users in the intelligent network to access these shared files are set. The file authority types that can be set include, but are not limited to the following: to read-only the file, to read/write the file, be executable and duplicable for the file.
Step 804: Whether a file to be shared by the user is a webpage link is judged. When the file to be shared by the user is a webpage link, Step 808 is performed. Otherwise, Step 806 is performed.
Step 806: A user authenticating component judges whether the file to be shared exists on a local terminal and simultaneously judges whether the user is authorized to access the local file to be shared. If the local file to be shared does not exist, or the user is not authorized to access the file to be shared, Step 814 is performed.
Step 808: An automatic keyword extracting component extracts the keyword of the shared file automatically according to a type of the shared file and stores the keyword in the system.
Step 810: The user may modify the keyword of the shared file on an operating interface of the automatic keyword extracting component and stores the keyword in the system.
Step 812: Other users authorized to access the shared file in the intelligent network may access a content of the shared file through the distributed link shared file system.
Step 814: Then a sharing operation fails and the process is exited.

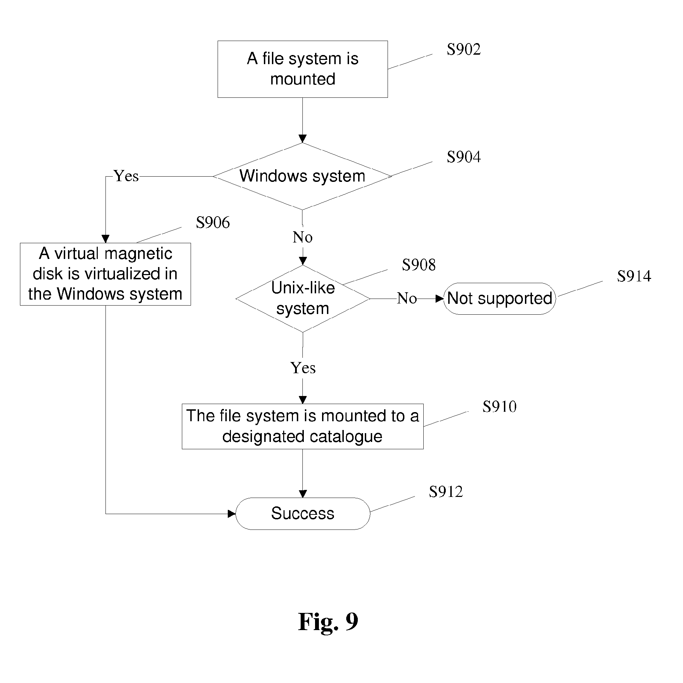

Fig. 9 is a flowchart of accessing, by a terminal, resources shared by other terminals in a network according to an example embodiment of the present invention, including the following steps as shown in Fig. 9.
Step 902: A user opens a terminal, and a system mounts the distributed link shared file system into the operating system automatically.
Step 904: Whether the user uses a Windows operating system is judged. When the user uses the Windows operation system, Step 906 is performed. Otherwise, Step 908 is performed.
Step 906: A standard file system interface virtualizes a virtual magnetic disk in the Windows operating system and then Step 912 is performed.
Step 908: Whether the user uses a Linux operating system or other Unix-like operating systems is judged. When the user uses the Linux operating system or other Unix-like operating systems, Step 910 is performed. Otherwise, Step 914 is performed.
Step 910: The standard file system interface mounts the distributed link shared file system to a designated catalogue.
Step 912: The distributed link shared file system provides a standard file system operating interface in the operating system of the terminal of the user. The user may access files shared by other users in the intelligent network like accessing a file of the local terminal.
Step 914: The system does not support other operating systems.

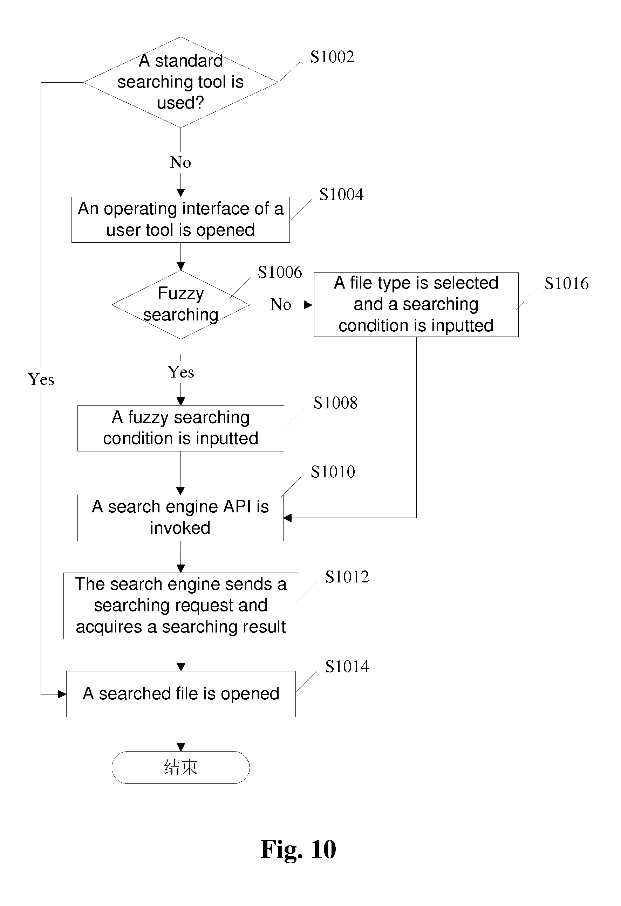

Fig. 10 is a flowchart of searching for a shared resource by a terminal according to an example embodiment of the present invention, including the following steps as shown in Fig. 10.
Step 1002: When a user wants to use a searching tool (e.g. a window resource management device) built in an operating system to search for files shared by other users, Step 1014 is performed. Otherwise, Step 1004 is performed.
Step 1004: The user opens the operating interface of a user tool and a plug-in component of the operating system.
Step 1006: Whether the user expects to perform fuzzy searching according to a keyword is judged. When the user expects to perform fuzzy searching according to a keyword, Step 1008 is performed. Otherwise, Step 1016 is performed.
Step 1008: The user inputs, on the operating interface, a keyword to be searched (i.e. a fuzzy searching condition), e.g. "Fenghuang ancient town". Then the system searches all shared files for files containing the keyword "Fenghuang ancient town". A plurality of keywords may be applied as the searching keywords, e.g. "Fenghuang Picture" is inputted, which indicates that files whose searching keyword contains not only "Fenghuang", but also "Picture" are searched. "mp3 or mp4" is inputted, which indicates that files whose searching keyword contains "mp3" or "mp4" are searched. After the inputting, Step 1010 is performed.
Step 1010: The user tool and the plug-in component of the operating system invoke an Application Program Interface (API) provided by a distributed search engine to acquire a file satisfying the searching condition.
Step 1012: The distributed search engine sends a searching request to a terminal in an intelligent network. Other terminals in the intelligent network search a local file system for a shared file satisfying the condition and return a result to a terminal initiating the request. After obtaining the result, the search engine on the terminal initiating the request returns the searched result to the user tool and the plug-in component of the operating system. The user tool and the plug-in component of the operating system display the searched result on the operating interface of the user tool and the plug-in component of the operating system.
Step 1014: After the file is searched, the user may open the file by a single click or double clicks on the icon of file or the title of the file with a mouse.
Step 1016: The user expects to perform classified searching through the user tool and the plug-in component of the operating system, then a file class to be searched is selected on the operating interface, and the characteristic of the file to be searched is inputted subsequently to perform searching. The common file class includes the following: an audio file, a video file, a word document, a pdf document and so on. Different kinds of files are with different characteristics, e.g. the characteristics of the audio file include a title, an artist, an album, a format and a duration; the characteristics of the word document include a catalogue, an author, a title, a subject, a keyword, a class, a state, and a remark; the characteristics of the pdf file include an author, a title, a subject, a keyword, a creator and information of the creator. After the inputting is completed, Step 1010 is performed.

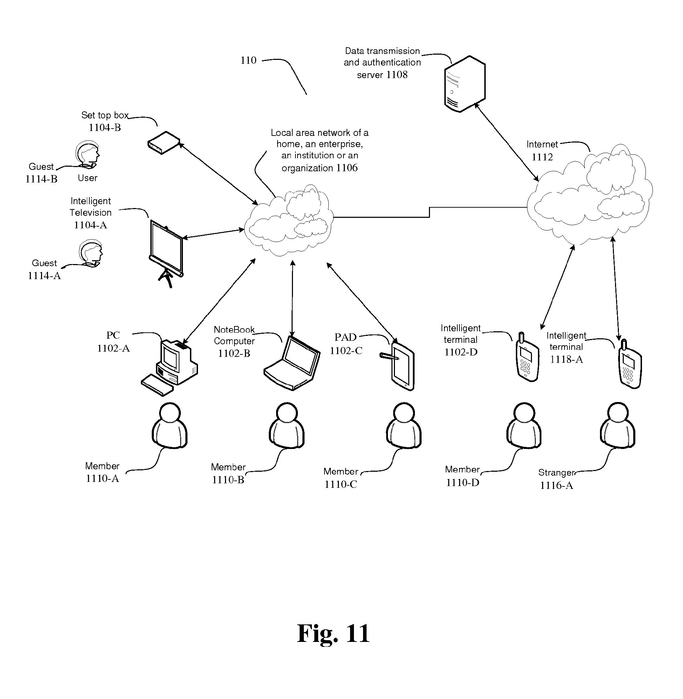

Fig. 11 is a structural diagram of a resource sharing system according to an example embodiment of the present invention. A method for providing access in a distributed file system of the intelligent network in an exemplary operating environment is described in the example embodiment of the present invention. The method allows a real user to access the object of the file system. Further, it allows the user to access the object of the file system from a real terminal in the method.

As shown in Fig. 11, the operating environment of the resource sharing system 110 includes:
1. A home local area network 1106 interconnecting one or more intelligent network computing terminals 1102-A, 1102-B and 1102-C, an 1104-A and 1104-B in one intelligent network.
2. The Internet 1112 interconnecting the home local area network 1106 with a data transmission and authentication server 1108, and an intelligent terminal 1102-D used by an intelligent network member 1110-D.
3. An intelligent television 1104-A and a set top box 1104-B used by a guest 1114-A and a guest 1114-B.
4. A terminal PC 1102-A, a NoteBook Computer 1102-B, a PAD (portable android device) 1102-C and an intelligent terminal 1102-D used by members 1110-A, 1110-B, 1110-C and 1110-D of the intelligent network.
5. The intelligent terminal 1102-D performs data transmission and identity authentication on the terminal in the local area network 1106 through the data transmission and authentication server 1108.

A stranger 1116-A is not in one intelligent network with the members 1110-A, 1110-B, 1110-C and 1110-D of the intelligent network, thus the stranger is not allowed to access the distributed link shared file system in the embodiments of the present invention.

Files system objects shared among a plurality of computing terminals in an intelligent home network may include files, catalogues and webpage links. When an intelligent network computing terminal in the local area network 1106 is removed from the local area network 1106, an intelligent network to which the intelligent network computing terminal belongs may be queried through the data transmission and authentication server 1108, and through the data transmission and authentication server 1108, a file is shared with the intelligent network computing terminal in the intelligent network to which the intelligent network computing terminal belongs.

In the resource sharing system 110, a computing terminal of an intelligent home network may share files in a plurality of file systems in the terminal. These file systems include, but not only include the following: a New Technology File System (NTFS) file system, a Second Extended (Ext2) file system, an NFS file system, a Common Internet File System (CIFS) and so on. The shared files include, but not only include the following: an audio file, a video file, a picture, an office document, a webpage link and so on.

Intelligent network computing terminals may be positioned at different geographic locations. These terminals may be located in one local area network, may be also located in different local area networks and may be further located in a wide area network. A user 1110 does not need to learn the locations of these intelligent network computing terminals 1102 and 1104.

When the intelligent network computing terminal cancels to share the file, other intelligent network computing terminals can no longer access the file which is cancelled to be shared, but is still able to continue to access files that are still shared.

The local area network 1106 and the Internet 1112 may be any wired or wireless networks known in the art, and the embodiment of the present is by no means limited by network types.

Further, the resource sharing system 110 may operate on any operating system known in the art. For example, the operating system may be a Windows operating system, a Linux operating system, a Unix operating system, an iOS operating system, an AIX operating system, a Solaris operating system, an MAC operating system and so on.

The data transmission and authentication server 1108 is configured to connect the terminal 1102-D located on the Internet 1112 to the local area network 1106. The terminals 1102 and 1104 may communicate directly with each other through the local area network 1106, and may also communicate in a P2P (point-to-point) manner and may further transfer a data message through the data transmission and authentication server 1108. The embodiment of the present is not limited by a method for communication between the terminals.

Further, terminals in the embodiment of the present embodiment are divided into two classes: trusted terminals and untrusted terminals. Terminals located in the local area network 1106 believe that an opposite side is a trusted terminal while terminals not simultaneously located in the same local area network 1106 believe that the opposite side is a untrusted terminal. Before accessing a shared file, the untrusted terminal needs to perform authentication by the data transmission and authentication server, and a file can be shared and accessed only among the authenticated terminals. When the untrusted terminal is performed the authentication by the data transmission and authentication server, a trusted computing technology may be applied or not be applied.

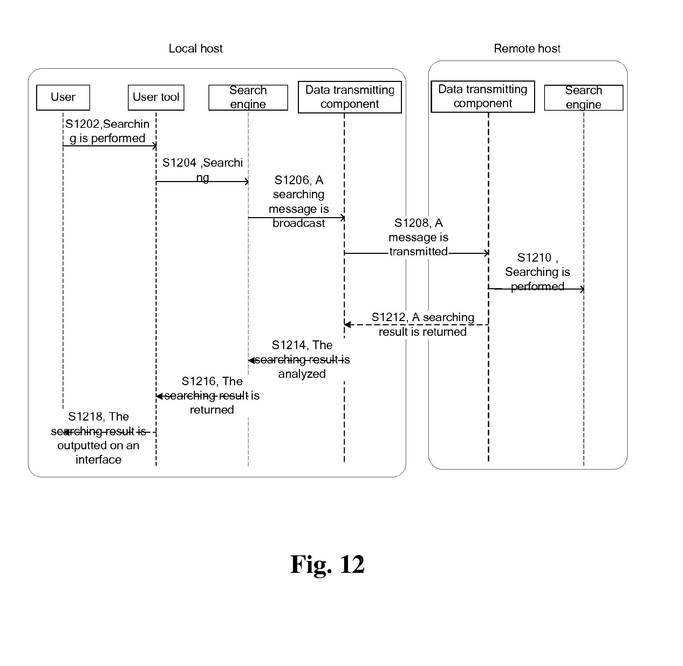

Fig. 12 is a flowchart of searching for a shared resource by a terminal according to an example embodiment of the present invention, including the following steps as shown in Fig. 12.
Step 1202: A user performs searching on a local host, which is implemented by operating the operating interface of a user tool and a plug-in component (i.e. the user tool as shown in Fig. 8) of an operating system.
Step 1204: The user tool and the plug-in component of the operating system invoke the API provided by the search engine to perform searching.
Step 1206: The search engine invokes an API provided by a data transmitting component to send a broadcast message to all member terminals in the intelligent network.
Step 1208: The data transmitting component sends the message to a remote host.
Step 1210: A data transmitting component on the remote host invokes a search engine on the remote host to search a file satisfying the searching requirement of the remote host.
Step 1212: The data transmitting component on the remote host returns a searching result to the local host.
Step 1214: A search engine of the local host analyzes the message returned from the data transmitting component of the local host.
Step 1216: The search engine of the local host receives the searching result message of a remote terminal, or a message of the remote host is not received within a certain period of time, the search engine returns a searching result to the user tool and the plug-in component of the operating system.
Step 1218: A user tool and a plug-in component of an operating system of the local host output, according to the searching result returned by the search engine, the searching result on an operating interface of the user tool and the plug-in component of the operating system.

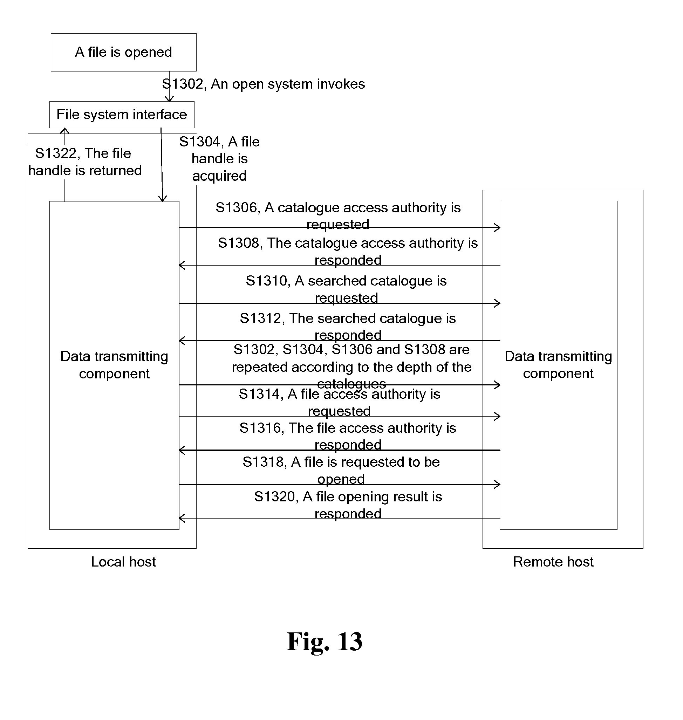

Fig. 13 is a schematic diagram of an implementation process of a typical standard file system interface named open according to an example embodiment of the present invention, which is only an example and does not mean that the embodiment of the present invention only implements the standard interface open. The process includes the following steps as shown in Fig. 13.
Step 1302: A file is opened by an application through invoking performed by a standard open system.
Step 1304: A standard file system interface invokes a data transmitting component to acquire a file handle of a file to be opened.
Step 1306: The data transmitting component parses the filename inputted by a user, performs parsing from a catalogue of a first layer until a catalogue, at which the file to be opened is located, is parsed, and then determines the remote host where the catalogue that needs to be processed currently locates, sends a message to the remote host and acquires the access authority of the user for the catalogue.
Step 1308: The data transmitting component of the remote host responds a catalogue access authority to a local host. When the user of the local host is not authorized to access the catalogue, the data transmitting component of the local host returns an error code to the file system interface and the current opening operation of the user fails.
Step 1310: The data transmitting component of the local host sends a message to the data transmitting component of the remote host to request for searching a sub-catalogue or a file in the catalogue.
Step 1312: The data transmitting component of the remote host responds the searching request to the data transmitting component of the local host. When the response returned by the data transmitting component of the remote host indicates that the sub-catalogue or the file does not exist, the data transmitting component of the local host returns an error code to the file system interface of the local host and the current opening operation of the user fails. When the user of the local host is not authorized to open the catalogue of the remote host, the data transmitting component of the local host returns an error code to the file system interface of the local host, and the current opening operation of the user fails.
Step 1306, Step 1308, Step 1310 and Step 1312 are repeated according to the depth of file catalogues opened by the user until the file that the user excepts to open is searched. For example, when the user wants to open a file /mnt/a/b/c/d/e/001.txt in the Linux system and the file system according to the embodiments of the present invention is mounted to a catalogue /mnt, then the data transmitting component will need to repeat Step 1306, Step 1308, Step 1310 and Step 1312 for 6 times totally to search the 5 catalogues a, b, c, d and e respectively and search for the file 001.txt in the sub-catalogue e.
Step 1314: The data transmitting component of the local host sends a message to the data transmitting component of the remote host to request for inquiring an access authority of a file.
Step 1316: The data transmitting component of the remote host returns a response request to the data transmitting component of the local host. When the inquiry result indicates that the user is not authorized to open the file, the data transmitting component of the local host returns an error code to the file system interface of the local host and the current opening operation of the user fails.
Step 1318: The data transmitting component of the local host sends a message to the data transmitting component of the remote host to request for opening a file.
Step 1320: The data transmitting component of the remote host returns the mark of the file to the data transmitting component of the local host. During the subsequent reading and writing operation, the data transmitting component of the local host and the data transmitting component of the remote host will use the mark as an identifier to represent that the file will be read and written.
Step 1322: The data transmitting component of the local host records the file identifier for transmitting the file with the data transmitting component of the remote host and returns a local file system handle to the file system interface of the local host.

It needs to be noted that the steps shown in the flowcharts of the accompanying drawings may be executed in a computer system such as a group of computer executable instructions. Moreover, although logic sequences have been shown in the flowcharts, the steps shown or described may be executed in sequences different from the above sequences here in some cases.

To sum up, according to the resource sharing method, device, system and terminal and the resource management center provided in the above embodiments of the present invention, the resource sharing device is added on the terminal, and by interacting with a resource management center through the resource sharing device, the terminal acquires the resources shared by other terminals and displays the resources in the manner of the file system, thereby implementing resource sharing among the terminals without knowing on which terminals the shared resources are located and which terminals share the resources. The terminal may access these shared resources through the file system as long as the terminal is authorized to access the resources, thus facilitating the user to share the resources between terminals in a network.

Obviously, those skilled in the art should understand that, each component or each step of the embodiments of the present invention may be implemented by a universal computing device. They may be concentrated on a single computing device or distributed on a network composed of a plurality of computing devices. Optionally, they may be implemented by program codes executable by a computing device so that they may be stored in a storing device and executed by the computing device, or they may be implemented by respectively fabricating them into each integrated circuit component, or by fabricating a plurality of components or steps of them into a single integrated circuit component. In this way, the present invention is not limited to any specific combination of software and hardware.

The above are only preferred embodiments of the present invention, and is not used for limiting the invention. For those skilled in the art, the present invention may have various alterations and variations. Any modification, equivalent replacement, improvement and so on made within the spirit and principle of the present invention should be included within the scope of protection of the present invention.

## Claims

1. A resource sharing method, **characterized by** comprising:
uploading, by a resource sharing device on a terminal, description information of a resource to be shared by the terminal to a resource management center;
providing, by the resource sharing center, the description information of the resource to resource sharing devices of other terminals to enable the resource sharing devices of said other terminals to display the resource in a manner of a file system.

2. The method according to claim 1, **characterized in that** before uploading the description information of the resource to be shared by the terminal to the resource management center, the method further comprises:
extracting, by the resource sharing device on the terminal according to the resource to be shared, a keyword of the resource to be shared;
associating, by the resource sharing device on the terminal, the keyword with the resource to be shared; and
storing in the terminal and/or the resource management center, by the resource sharing device on the terminal, the keyword associated with the resource to be shared, wherein a type of the resource comprises at least one of the followings: a webpage, a picture, an audio, a video and a document.

3. The method according to claim 2, **characterized in that** after extracting, by the resource sharing device on the terminal according to the resource to be shared, the keyword of the resource to be shared, associating the keyword with the resource to be shared and storing, in the terminal and/or the resource management center, the keyword associated with the resource to be shared, the method further comprises:
accepting, by the resource sharing device on the terminal, a keyword modified by a user of the terminal according to an actual situation.

4. The method according to claim 1, **characterized in that** before uploading the description information of the resource to be shared by the terminal to the resource management center, the method further comprises:
accepting login information inputted by a user, logging in to the resource management center and setting to share resources.

5. The method according to any one of claims 1 to 4, **characterized in that** the resource comprises at least one of the followings: a file accessible by a user, a file created by a user, a file used by a user, a webpage accessed by a user and a file being accessed by a user.

6. The method according to any one of claims 1 to 4, **characterized in that** the terminal and said other terminals are located in a same local area network, or are located in different local area networks, or are located in a local area network and a wide area network respectively.

7. A resource sharing method, **characterized by** comprising:
acquiring, by a resource sharing device on a terminal, through a resource management center, description information of resources shared by other terminals, wherein the description information of the resources are uploaded to the resource management center by resource sharing devices of said other terminals;
displaying, in a manner of a file system, the resources shared by said other terminals.

8. The method according to claim 7, **characterized in that** before acquiring, through the resource management center, the description information of the resources shared by said other terminals, the method further comprises:
sending, by the resource sharing device on the terminal, a searching request to the resource management center and/or said other terminals respectively, wherein the searching request is used for searching for the resources shared by said other terminals and/or resources shared by other users, and the searching request comprises a keyword of a resource to be searched;
receiving, by the resource sharing device on the terminal, a searching result from the resource management center and/or said other terminals, wherein the searching result is a set of resources which satisfy a searching condition of the keyword and are searched in a set of shared resources by the resource management center and/or said other terminals.

9. The method according to claim 7, **characterized in that** after displaying the resources shared by said other terminals in the manner of the file system, the method further comprises:
communicating, by the resource sharing device on the terminal, with the resource management center and/or said other terminals;
accessing, by the resource sharing device on the terminal through the file system, the resources shared by said other terminals to the terminal; and
reading and writing, by the resource sharing device on the terminal, contents of the resources.

10. The method according to claim 7, **characterized in that** displaying, in the manner of the file system, the resources shared by said other terminals comprises:
providing, by the resource sharing device on the terminal, a standard file system interface;
accessing, through an application of the terminal, the resources by using the standard file system interface.

11. The method according to claim 10, **characterized in that** the standard file system interface operates in different operating systems, wherein the different operating systems comprise: a Windows operating system, a Linux operating system, an iPhone Operating System, iOS, an Advanced Interactive executive, AIX, operating system, a Solaris operating system and other Unix-like operating systems.

12. The method according to claim 10, **characterized in that** the standard file system interface satisfies a standard of a Portable Operating System Interface of Unix, POSIX, file system and provides at least one of the following interfaces to the application: an interface for opening a file, an interface for closing a file, an interface for reading and writing a file, and a POSIX file lock; when a plurality of terminals concurrently read and write shared resources which the plurality of terminals are authorized to access, reading and writing conflict is prevented by using the POSIX file lock; after the terminal modifies the shared resources, said other terminals read a content of the modified resources.

13. The method according to any one of claims 7 to 12, **characterized in that** the resources shared by said other terminals comprise shared resources on other terminals, which are accessible by a user logging in on the terminal after the user shares resources to himself on said other terminals.

14. The method according to any one of claims 7 to 12, **characterized in that** the terminal and said other terminals are located in a same local area network, or are located in different local area networks, or are located in a local area network and a wide area network respectively.

15. A resource sharing method, **characterized by** comprising:
acquiring, by a resource management center, through a resource sharing device on a terminal, description information of a resource to be shared by the terminal;
providing, by the resource management center, the description information of the resource to resource sharing devices on other terminals to enable the resource sharing devices on said other terminals to display the resource in a manner of a file system.

16. The method according to claim 15, **characterized in that** before acquiring, by the resource management center, through the resource sharing device on the terminal, the description information of the resource to be shared by the terminal, the method further comprises:
accepting, by the resource management center, registration of a user and storing, by the resource management center, registration information of the user;
authenticating, by the resource management center, an identity of a logged-in user, and accepting, by the resource management center, a login request of a legal user.

17. The method according to claim 15, **characterized in that** before acquiring, by the resource management center, through the resource sharing device on the terminal, the description information of the resource to be shared by the terminal, the method further comprises:
accepting, by the resource management center, a request of a user for adding other users as friends and/or forming a user group with other users, and storing, by the resource management center, information of the friends of the user and/or information of the user group to which the user belongs.

18. The method according to claim 15, **characterized in that** when the terminal fails to directly communicate, in a Peer-to-Peer, P2P, manner, with other terminals where resources to be accessed locate, the method further comprises:
providing, by the resource management center, a data transmission transfer service used for the terminal communicating with said other terminals, wherein the data transmission transfer service comprises that the resource management center forwards to said other terminals, received data to be sent by the terminal to said other terminals, and the resource management center forwards to the terminal, received data to be sent by said other terminals to the terminal.

19. The method according to any one of claims 15 to 18, **characterized in that** the terminal and said other terminals are located in a same local area network, or are located in different local area networks, or are located in a local area network and a wide area network respectively.

20. A resource sharing device, applied to a terminal, wherein the resource sharing device comprises:
an uploading component, configured to upload description information of a resource to be shared to a resource management center;
a first acquiring component, configured to acquire from the resource management center, description information of resources shared by other terminals;
a displaying component, configured to display, in a manner of a file system, resources shared by said other terminals.

21. The resource sharing device according to claim 20, **characterized in that** the resource sharing device further comprises:
a login component, configured to accept login information inputted by a user and log in to the resource management center;
a resource sharing component, configured to set to share resources;
an abstracting component, configured to extract, according to the resource to be shared, a keyword of the resource to be shared, associate the keyword with the resource to be shared, and store in the terminal and/or the resource management center, the keyword associated with the resource to be shared, wherein a type of the resource comprises at least one of the followings: a webpage, a picture, an audio, a video and a document.

22. The resource sharing device according to claim 20, **characterized in that** the resource sharing device further comprises:
a resource accessing component, configured to communicate with the resource management center and/or said other terminals, access through the file system, the resources shared by said other terminals to the terminal, and read and write contents of the resources.

23. The resource sharing device according to claim 20, **characterized in that** the resource sharing device further comprises:
a sending component, configured to send a searching request to the resource management center and/or said other terminals respectively, wherein the searching request is used for searching for the resources shared by said other terminals and/or resources shared by other users, and the searching request comprises a keyword of a resource to be searched;
a receiving component, configured to receive a searching result from the resource management center and/or said other terminals, wherein the searching result is a set of resources which satisfy a searching condition of the keyword and are searched in a set of shared resources by the resource management center and/or said other terminals.

24. The resource sharing device according to any one of claims 20 to 23, **characterized in that** the terminal and said other terminals are located in a same local area network, or are located in different local area networks, or are located in a local area network and a wide area network respectively.

25. A terminal, **characterized in that** the terminal is provided with a resource sharing function, and the terminal comprises the resource sharing device according to any one of claims 20 to 24.

26. A resource management center, **characterized by** comprising:
a second acquiring component, configured to acquire, through a resource sharing device on a terminal, description information of a resource to be shared by the terminal;
a providing component, configured to provide the description information of the resource to resource sharing devices on other terminals to enable the resource sharing devices on said other terminals to display the resource in a manner of a file system.

27. The resource management center according to claim 26, **characterized in that** the resource management center further comprises:
a first storing component, configured to accept registration of a user and store registration information of the user;
an authenticating component, configured to authenticate an identity of a logged-in user;
a first receiving component, configured to receive a login request of a legal user.

28. The resource management center according to claim 26, **characterized in that** the resource management center further comprises:
a second receiving component, configured to receive a request of a user for adding other users as friends and/or forming a user group with other users;
a second storing component, configured to store information of the friends of the user and/or information of the user group to which the user belongs.

29. The resource management center according to claim 26, **characterized in that** the resource management center further comprises:
a transfer service providing component, configured to, when the terminal fails to directly communicate, in a Peer-to-Peer, P2P, manner, with other terminals where resources to be accessed locate, provide a data transmission transfer service used for the terminal communicating with said other terminals, wherein the data transmission transfer service comprises that the resource management center forwards to said other terminals, received data to be sent by the terminal to said other terminals, and the resource management center forwards to the terminal, received data to be sent by said other terminals to the terminal.

30. A resource sharing system, **characterized by** comprising the terminal according to claim 25 and the resource management center according to any one of claims 26 to 29.
